# EUROPEAN PATENT SPECIFICATION

(11) **EP 1 452 610 B1**
(45) Date of publication and mention of the grant of the patent: **10.02.2010**
(21) Application number: 04004210.3
(22) Date of filing: 25.02.2004
(51) Int. Cl.: C21D 9/36, C21D 1/18

(54) **Process for producing a rolling, sliding part**
Verfahren zur Herstellung eines Walz- und Gleitelements
Procédé de fabrication d'une pièce roulante et coulissante

(30) Priority: 28.02.2003 JP 2003053219
(43) Date of publication of application: 01.09.2004
(73) Proprietor: JTEKT Corporation, Osaka-shi Osaka 542-8502 (JP)
(72) Inventor: Harada, Hisashi, c/oKoyo Seiko Co., Ltd., Osaka-shi Osaka 542-0081 (JP); Tazumi, Hajime, c/oKoyo Seiko Co., Ltd., Osaka-shi Osaka 542-0081 (JP); Ueda, Michiru, c/oKoyo Seiko Co., Ltd., Osaka-shi Osaka 542-0081 (JP); Murakami, Yukitoshi, c/oKoyo Seiko Co., Ltd., Osaka-shi Osaka 542-0081 (JP)
(74) Representative: TER MEER - STEINMEISTER & PARTNER GbR

(56) References cited:
- EP-A- 1 279 847
- GB-A- 2 352 484
- US-A- 3 477 884
- US-A- 6 119 347
- STAHL F ET AL: "UNTERSUCHUNGEN DER UEBERROLLUNGS-LEBENSDAUER VON WAELZLAGERKUGELN AUS STRANGGUSS 100CR6" 1 March 1998 (1998-03-01), HAERTEREI TECHNISCHE MITTEILUNGEN, CARL HANSER VERLAG. MUNCHEN, DE, PAGE(S) 125-133 , XP000755097 ISSN: 0341-101X * page 125 - page 128; figures 2,3; table 4 *
- LAMPMAN S.R., ZORC T.B.: "ASM HANDBOOK, VOLUME 4, HEAT TREATING" 1991, ASM INTERNATIONAL , U.S.A. * page 132 - page 133 *

## Description

### BACKGROUND OF THE INVENTION

The present invention relates **to a process for producing a rolling, sliding part** for use under severe conditions involving, for example, a high temperature, high speed, high load or high vibration, such as components of vehicle alternators of auxiliary engine machinery, compressors for motor vehicle air conditioners and water pumps, and disks, rollers and like power transmission parts of toroidal continuously variable transmissions, and a process for producing the part.

The term the "rolling, sliding part" as used herein and in the appended claims refers to a part which makes pure rolling contact, pure sliding contact and contact involving both rolling contact and sliding contact.

Parts of rolling bearings (anti-friction bearings), such as rings and rolling bodies (elements) of rolling bearings, are made from a high-carbon chromium bearing steel such as JIS SUJ2 or a bearing steel such as a case hardening steel like JIS SCR420. In the case where rolling bearings are used under severe conditions involving a high temperature, high speed, high vibration or high load, fatigue structures such as DEA (Dark Etching Area) and WEA (White Etching Area) occur under the surface. It has been found that the fatigue structure of WEA, if produced, seriously shortens the life of the rolling bearing. For example, ball bearings for alternators are used at a high speed of up to about 18000 to about 22000 rpm under a high impact load of at least 20 G and are liable to develop the fatigue structure.

Among the fatigue structures occurring in parts of rolling bearings during use, the WEA is found to be a structure comprising crystal grains which are finely divided to sizes on the order of nm. It is thought that the WEA occurs in the following manner. Cracks develop in the rolling bearing part while the bearing is in use owing to stress concentration, and are further subjected to stress concentration, which gives rises to repeated plastic deformation along the cracks, consequently producing crystal grains finely divided to the order of nm to form a WEA.

In order to prevent generation of such a WEA, it has been known to add Ni or Mo to a bearing steel to give improved toughness and prevent cracking, consequently inhibiting the WEA (see, for example, the publication of JP-A No. 2002-60904).

However, none of the rolling, sliding parts which are made from a common inexpensive bearing steel, such as high-carbon chromium bearing steel or case hardening steel, are presently reduced in the likelihood of developing the WEA.

*The* GB-A-2 352 484 *discloses a manufacturing process for rolling elements made from bearing steel comprising the steps of heating the rolling elements to 830 to 870°C and quenching in oil, applying a first tempering at 130°C followed by shot-peening or barrelling for providing a compressive stress layer. The mechanical working is followed by a second tempering at 150-240°C to lower the amount of retained austenite.*

*The document "*Stahl F Et al: "Untersuchungen der Überrollungs-Lebensdauer von Wälzlagerkugeln aus Strangguss 100CR6" 1 March 1998 (1998-03-01), Härterei Technische Mitteilungen, Carl Hanser Verlag, München, DE, Page(s) 125-133, XP000755097 ISSN: 0341-101X*" discloses a manufacturing process for rolling elements made of bearing steel SAE 52100*/*SUJ2, showing a surface hardness of 64 HRC, a residual compressive stress of -1000 MPa, a volume fraction of retained austenite of 9% and a half value width of martensite of 6.0°.*
*The* EP-A 1 279 847 A1 *discloses a rolling part for a bearing made from bearing steel, a rolling surface thereof having a surface layer portion which is 782 to 815 in Vickers Hardness equivalent to 63 to 64 to Rockwell C hardness [table 1, examples 1 to 4] and a content of retained austenite of 0 to 7,3% (table 1. p. 5]. No indication on the X-ray half value width of martensite is given.*
*The publication of* Lampman S.R. & Zorc T.B.: "ADM Handbook, Heat Treating, Vol. 4", US, 1991, pages 132-133 *discloses tempering procedures and particularly the method of multiple tempering.*

### SUMMARY OF THE INVENTION

An object of the present invention, which has been accomplished in view of the above situation, is to provide a process for producing a rolling, sliding part which is made from a common bearing steel and which is reduced in the likelihood of developing a fatigue structure.

The present invention has been accomplished under the following circumstances. To fulfil the above object, we have conducted research repeatedly and consequently found that a localized stress occurs due to rolling contact in the surface layer portion of rolling, sliding surface of the rolling, sliding part, and that the stress acts to cause local shear deformation of the martensitic structure to thereby change the region into crystal grains on the order of nm and result in the formation of a WEA.

We have further found that when the rolling, sliding surface layer portion of the rolling, sliding part has a great heat treatment strain or a large quantity of retained austenite, stress concentration is liable to occur, consequently causing local shear deformation in the martensitic structure. These findings have matured to the present invention. We have also found that when the rolling, sliding surface layer portion of the rolling, sliding part has an increased residual compressive stress, a local shear deformation also occurs in the martensitic structure.

The present invention provides **a process for producing** a rolling, sliding part made from a bearing steel, a rolling, sliding surface thereof having a surface layer portion which is 56 to 64 in Rockwell C hardness, up to 12 vol. % in retained austenite content and 4 to 6 degrees in the X-ray half value width (half-value width) of martensite.

With the **process** of the present invention, a WEA or like fatigue structure can be inhibited although the part is made from a common bearing steel, with the result that the part exhibits a prolonged rolling, sliding life when used under severe conditions involving a high temperature, high speed, high load or high vibration. Moreover, the part is made from a common bearing steel and is therefore low in material cost. Among bearing steels, JIS SUJ2 is manufactured especially in large quantities, so that use of this steel results in a very low material cost.

Preferably, the surface layer portion of rolling, sliding surface of the rolling, sliding part is up to 9 vol. % in retained austenite content, 4 to 5 degrees in the X-ray half value width of martensite and up to 1000 MPa in the absolute value of residual compressive stress.

The present invention provides **a process for producing** a rolling bearing comprising an inner and an outer ring and a rolling body, the rolling body comprising the rolling, sliding part of the invention described. A WEA or like fatigue structure is liable to occur in the rolling bodies of rolling bearings which are used under severe conditions involving a high temperature, high speed, high load or high vibration. However, with the rolling bearing of the present invention wherein the rolling, sliding part of the invention is used as the rolling body, it is possible to reduce the likelihood of the rolling body developing a WEA or like structure and to give a prolonged rolling fatigue life to the rolling bearing.

Preferably, the rolling bearing comprises an inner and an outer ring and a rolling body, the rolling body being made from a high-carbon chromium bearing steel, a surface layer portion of a rolling surface of the rolling body having a surface hardness of 56 to 64 in terms of Rockwell C hardness and a retained austenite content of up to 9 vol. % and being 4 to 5 degrees in the X-ray half value width of martensite and up to 1000 MPa in the absolute value of residual compressive stress.

The present invention provides a process for producing a rolling, sliding part which is characterized by subjecting to a hardening treatment a worked part blank made from a bearing steel in a predetermined shape, subjecting the hardened blank to a tempering treatment at least twice and surface-hardening the resulting blank.

With the process of the invention for producing the rolling, sliding part, the blank to be used for the part is made from a common bearing steel and is therefore low in material cost. Moreover, the rolling, sliding part produced is reduced in the likelihood of developing a WEA or like fatigue structure and consequently exhibits a prolonged rolling, sliding life when used under severe conditions involving a high temperature, high speed, high load or high vibration.

Preferably, a rolling body for use in rolling bearings is produced from a worked part blank made from a high-carbon chromium bearing steel in a predetermined shape, by subjecting the blank to a hardening treatment, subjecting the hardened blank to a tempering treatment at least twice and further surface-hardening the resulting blank.

### BRIEF DESCRIPTION OF THE DRAWING

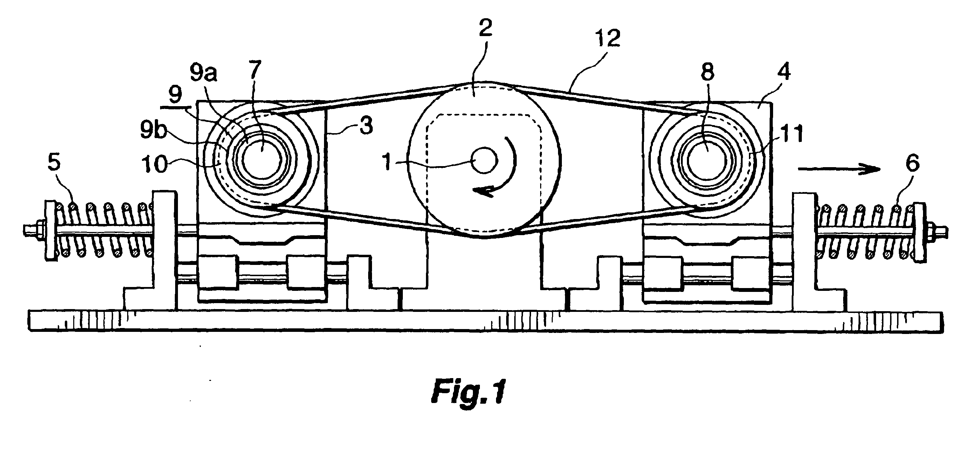

FIG. 1 is a front view showing a rapid acceleration-deceleration test device used for evaluation tests in Examples and Comparative Examples.

### DESCRIPTION OF THE PREFERRED EMBODIMENTS

The present invention provides **a process for producing** a rolling, sliding part made from a bearing steel, and the rolling, sliding surface thereof has a surface layer portion which is 56 to 64 in Rockwell C hardness, up to 12 vol. % in retained austenite content and 4 to 6 degrees in the X-ray half value width of martensite. Examples of bearing steels to be used are common bearing steels including high-carbon chromium bearing steels such as JIS SUJ2 and case hardening steels such as JIS SCR420.

With the rolling, sliding part of the present invention, the surface hardness of the surface layer portion of the rolling, sliding surface thereof is limited to 56 to 64 in terms of HRC because if the hardness is less than 56 in HRC, an impaired rolling, sliding life will result when the part is used not only under severe conditions involving a high temperature, high speed, high load or high vibration but also under usual conditions, and further because if the hardness is in excess of 64 in HRC, the part is given an excessively increased heat treatment strain and will not be effectively reduced in the likelihood of developing a WEA, consequently exhibiting a shortened rolling, sliding life when used under severe conditions involving a high temperature, high speed, high load or high vibration.

Further with the rolling, sliding part of the present invention, the surface layer portion of the rolling, sliding surface thereof is limited to not greater than 12 vol. % in retained austenite content for the following reason. Austenite, which is lower in hardness than martensite, provides sites for the generation of localized strains when the part is brought into rolling, sliding contact. Strains occur markedly if the retained austenite content exceeds 12 vol. %, with the result that a sufficient effect to inhibit the WEA due to strain will not be available. Preferably, the retained austenite content is up to 9 vol. %.

Further with the rolling, sliding part of the present invention, the surface layer portion of the rolling, sliding surface thereof is limited to 4 to 6 degrees in the X-ray half value width of martensite because if the width is less than 4 degrees, the surface layer portion is insufficient in hardness, giving an impaired rolling, sliding life to the part when it is used under severe conditions involving a high temperature, high speed, high load or high vibration, and further because if the width is over 6 degrees, the surface layer portion is given an excessive heat treatment strain, and the WEA will not be inhibited effectively. The X-ray half value width of martensite is preferably 4 to 5 degrees.

The term the "surface layer portion" refers to the surface and the vicinity thereof, namely, the portion which influences the rolling, sliding life. For example, the term the "surface layer portion" refers to a range from the outermost surface of the rolling, sliding surface to a depth where a maximum shear stress acts, and this range extends to a depth of 0.5 mm in the case of the raceway or rolling surface of a common rolling bearing part. In the case of balls for use in alternator ball bearings which are about 32 to about 72 mm in the outside diameter of the outer ring, the term the "surface layer portion" refers to a range from the outermost surface of the rolling surface to a depth of 0.2 mm.

The present invention provides a process for producing a rolling, sliding part characterized by subjecting to a hardening treatment a worked part blank made from a bearing steel in a predetermined shape, subjecting the hardened blank to a tempering treatment at least twice and surface-hardening the resulting blank. Examples of bearing steels to be used are common bearing steels including high-carbon chromium bearing steels such as JIS SUJ2 and case hardening steels such as JIS SCR420.

The hardening treatment of the process of the invention is conducted, for example, by heating the worked blank at 830 to 870° C for 10 to 60 minutes, and quenching the resulting blank.

With the process of the present invention for producing a rolling, sliding part, the tempering treatment is conducted at least twice for the following reason. WEA can be inhibited effectively by reducing the retained austenite content and decreasing the X-ray half value width of martensite, whereas the tempering temperature range must be raised above the usual temperature range (150 to 170° C) for the improvement of these material characteristics. We have found that the tempering treatment, if conducted at least twice, diminishes the retained austenite content and the X-ray half value width of martensite more greatly than when the tempering treatment is conducted only once. The first tempering treatment is conducted by holding the hardened blank at 150 to 170^{°} C for 60 to 120 minutes, and the final tempering treatment is conducted by holding the blank at 180 to 250^{°} C for 60 to 120 minutes. The first tempering treatment is conducted at a tempering temperature of 150 to 170^{°} C for the following reason. In the case where the tempering treatment is conducted at least twice by setting the tempering temperature at a higher level for the first treatment, the final tempering treatment results in a hardness lower than is desirable. Alternatively if the first tempering treatment is conducted at too low a temperature, the final tempering treatment results in smaller decreases in the retained austenite content and in the X-ray half value width of martensite. Accordingly, the first tempering treatment is to be conducted at a tempering temperature of 150 to 170^{°} C. The tempering temperature for the final tempering treatment is 180 to 250^{°} C because if the tempering temperature is at least 180° C, the WEA or like fatigue structure can be inhibited even when the part is used under severe conditions involving a high temperature, high speed, high load or high vibration. However, a lower hardness will result as the tempering temperature is raised, and the rolling, sliding life is then likely to become impaired, so that the upper limit of the tempering temperature is set at 250^{°} C. Incidentally,the tempering treatment may be conducted twice. In this case, the first tempering treatment is conducted by holding the hardened blank at 150 to 170^{°} C for 60 to 120 minutes, and the second, i.e., the final, tempering treatment is conducted by holding the blank at 180 to 250^{°} C for 60 to 120 minutes.

In the process of the present invention for producing a rolling, sliding part, the surface hardening treatment is conducted, for example, by cold working with use of a barrel. The part obtained by the process is finally finished as by polishing.

### EXAMPLES

The present invention will be further described with reference to specific examples and comparative examples.

### Examples 1-3 and Comparative Examples 1-8

A plurality of semifinished balls, 15/64 inch (6 mm) in diameter, were prepared from JIS SUJ2, then heated at 850° C for 20 minutes and thereafter quenched for hardening. The hardened balls were subjected to a tempering treatment twice or once by being held at specified different temperatures or at a specified temperature for 120 minutes. The resulting balls were placed into a rotary drum, which was then rotated at a required speed for a required period of time, whereby the balls were subjected to a surface hardening treatment. The surface hardness was controlled by suitably varying the rotational speed of the rotary drum and the treatment time. The balls were thereafter finished by polishing to obtain balls having a diameter of 15/64 inch as a completed product. The surface layer portion of each of completed products thus obtained was checked for surface hardness (HRC), retained austenite content, residual compressive stress and the X-ray half value width of martensite. The X-ray half value width of martensite was measured using an X-ray diffractometer, RINT 2000, product of Rigaku Co. , Ltd., under the conditions of X-rays: Cr-Kα rays, acceleration voltage (tube voltage): 40 kV, current (tube current): 200 mA, and diffraction plane: α (211) plane. The balls tempered twice were checked for the surface hardness (HRC) of surface layer portion, also after the completion of the first tempering treatment. Table 1 shows the results along with the tempering temperature.

### Evaluation Test

The balls prepared in each of Examples 1 to 3 and Comparative Examples 1 to 8 were assembled into a deep-groove ball bearing, 6202 in bearing number. A grease was applied to the bearing, which was then tested for rapid acceleration and deceleration using an auxiliary engine machinery test device shown in FIG. 1. With reference to FIG. 1, the rapid acceleration-deceleration test device comprises a pulley 2 fixed to a drive shaft 1 to be rotatingly driven by an unillustrated motor, movable bases 3, 4 arranged respectively on the left and right sides of the drive shaft 1 at a spacing therefrom and movable leftward and rightward, compression springs 5, 6 for biasing the respective movable bases 3, 4 leftwardly or rightwardly outward, and stationary shafts 7, 8 fixedly mounted on the respective bases 3, 4. The inner ring 9a of the bearing 9 to be tested is fixed to the stationary shaft 7 on the left movable base 3, and a pulley 10 is fixedly fitted around the outer ring 9b thereof. A pulley 11 is rotatably fitted around the stationary shaft 8 on the right movable base 4. A V belt 12 is reeved around the three pulleys 2, 10, 11. The load on the belt (belt tension) is so determined as to result in a maximum contact pressure of 2. 6 GPa. In this state, acceleration from 9000 rpm to 18000 rpm during a period of 0.5 second and deceleration from 18000 rpm to 9000 rpm similary during a period of 0.5 second were repeatedly effected. Table 1 also shows the result. "No flaking" listed in Table 1, the column of "Life" indicates that no flaking occurred during the test period.

**Table 1**

| | Tempering temp. (^{°} C) | | Surface hardness (HRC) | | Retained austenite content (vol. %) | X-ray half width (degrees) | Residual compressive stress (Mpa) | Life (h) | |
|---|---|---|---|---|---|---|---|---|---|
| | First | Second | After 1st | Completed product | | | | | |
| Example 1 | 155 | 180 | 64.2 | 63.3 | 8.6 | 4.99 | -954 | 790 | No flaking |
| Example 2 | 170 | 210 | 63 | 59.7 | 5.5 | 4.43 | -998 | 820 | No flaking |
| Example 3 | 170 | 200 | 63.5 | 61.7 | 6.5 | 4.25 | -939 | 900 | No flaking |
| Comp.Ex.1 | 140 | 160 | 66.2 | 65.6 | 14.8 | 6.55 | -890 | 76 | Flaking |
| Comp.Ex.2 | 150 | 150 | 65.2 | 65.1 | 13.9 | 6.76 | -888 | 70 | Flaking |
| Comp.Ex.3 | 155 | - | - | 65 | 13.4 | 6.35 | -874 | 89 | Flaking |
| Comp.Ex.4 | 155 | - | - | 65.1 | 12.8 | 6.18 | -758 | 150 | Flaking |
| Comp.Ex.5 | 170 | - | - | 64.9 | 13.5 | 6.28 | -813 | 74 | Flaking |
| Comp.Ex.6 | 260 | - | - | 58.5 | 4.3 | 3.45 | -818 | 288 | Flaking |
| Comp.Ex.7 | 150 | - | - | 65.4 | 31.9 | 7.17 | -939 | 49 | Flaking |
| Comp.Ex.8 | 230 | 250 | 58 | 55 | 3.1 | 4.3 | -954 | 300 | Flaking |

Table 1 reveals that the bearings incorporating the balls of Examples wherein the surface layer portion has a surface hardness of 56 to 64 in terms of Rockwell C hardness and a retained austenite content of up to 12 vol. % and is 4 to 6 degrees in the X-ray half value width of martensite have an exceedingly longer life than those incorporating the balls of Comparative Examples. Accordingly, the balls of the invention are especially useful for alternator ball bearings which are generally used under conditions involving rapid acceleration and deceleration.

## Claims

1. Process for producing a rolling, sliding part subjecting to a hardening treatment a worked part blank made from a bearing steel in a predetermined shape, subjecting the hardened blank to a tempering treatment at least twice and surface-hardening the resulting blank,
the process being **charcterized in that** the first tempering treatment is conducted at 150 to 170° C and the final tempering treatment is conducted at 180 to 250° C.

2. A process for producing a rolling, sliding part according to claim 1 wherein the tempering treatment is performed twice, and the first tempering treatment is conducted by holding the hardened blank at 150 to 170° C for 60 to 120 minutes, and the second tempering treatment is conducted by holding the resulting blank at 180 to 250° C for 60 to 120 minutes.

3. A process for producing a rolling, sliding part according to claim 1 or 2 wherein a rolling body for use in a rolling bearing is produced from a worked part blank made from a high-carbon chromium bearing steel in a predetermined shape.

4. A process for producing a rolling, sliding part according to any one of claims 1 to 3 wherein the surface hardening treatment is conducted by cold working.

5. A process for producing a rolling, sliding part according to claim 4 wherein the cold working is conducted by placing semifinished balls subjected to the final tempering treatment into a rotary drum and rotating the rotary drum at a required speed for a required period of time so that a surface layer portion is 56 to 64 in Rockwell C hardness.

6. A process for producing a rolling, sliding part according to any one of claims 1 to 5 wherein the balls are finished by polishing after the surface-hardening treatment.

7. A process for producing a rolling, sliding part according to any one of claims 1 to 6 wherein a ball for use in a rolling bearing is produced.

## Patentansprüche

1. Verfahren zur Herstellung eines rollenden, gleitenden Teils, das einem Härtungsverfahren unterworfen wird, bei dem ein bearbeiteter Rohling aus einem Lagerstahl in vorgegebener Form hergestellt wird, wobei der gehärtete Rohling wenigstens zweimal einer Temperbehandlung und der entstehende Rohling einer Oberflächenhärtung unterworfen wird,
welches Verfahren **dadurch gekennzeichnet ist, dass** die erste Temperbehandlung bei 150° bis 170°C durchgeführt wird und die abschließende Temperbehandlung bei 180° bis 250°C durchgeführt wird.

2. Verfahren zur Herstellung eines rollenden, gleitenden Teils gemäß Anspruch 1, bei dem die Temperbehandlung zweimal durchgeführt wird und die erste Temperbehandlung durchgeführt wird durch Halten des gehärteten Rohlings bei einer Temperatur von 150° bis 170°C für 60 bis 120 Minuten und die zweite Temperbehandlung durch Halten des entstehenden Rohlings bei 180° bis 250°C für 60 bis 120 Minuten durchgeführt wird.

3. Verfahren zur Herstellung eines rollenden, gleitenden Teils gemäß Anspruch 1 oder 2, wobei ein Rollenkörper zur Verwendung in einem Rollenlager hergestellt wird aus einem bearbeiteten Rohling des Teils, der aus Hoch-Kohlenstoff-Chromlagerstahl in vorgegebener Form besteht.

4. Verfahren zur Herstellung eines rollenden, gleitenden Teils gemäß einem der vorhergehenden Ansprüche 1 bis 3, wobei die Oberflächenhärtungs-Behandlung durchgeführt wird durch Kaltbearbeitung.

5. Verfahren zur Herstellung eines rollenden, gleitenden Teils gemäß Anspruch 4, wobei die Kaltbearbeitung durchgeführt wird, indem halbpolierte Kugeln, die der abschließenden Temperbehandlung ausgesetzt worden sind, in eine drehbare Trommel eingefüllt und die drehbare Trommel mit vorgegebener Drehzahl über eine vorgegebene Zeit gedreht wird, so dass eine Oberflächenschicht mit einer Härte von 56 bis 64 Rockwell C hergestellt wird.

6. Verfahren zur Herstellung eines rollenden, gleitenden Teils gemäß einem der Ansprüche 1 bis 5, wobei die Kugeln endbearbeitet werden durch Polieren nach dem Oberflächenhärtungsverfahren.

7. Verfahren zur Herstellung eines rollenden, gleitenden Teils gemäß einem der Ansprüche 1 bis 6, wobei eine Kugel zur Verwendung in einem Rollenlager erzeugt wird.

## Revendications

1. Procédé de fabrication d'une pièce roulante et coulissante, dans lequel on soumet à un traitement de durcissement une ébauche de pièce usinée réalisée en acier à roulements sous une forme prédéterminée, on soumet l'ébauche durcie à un traitement de trempe au moins deux fois et on durcit en surface l'ébauche résultante,
le procédé étant **caractérisé en ce que** le premier traitement de trempe est effectué entre 150 et 170° C et **en ce que** le traitement de trempe final est effectué entre 180 et 250° C.

2. Procédé de fabrication d'une pièce roulante et coulissante selon la revendication 1, dans lequel le traitement de trempe est effectué deux fois, et le premier traitement de trempe est effectué en maintenant l'ébauche durcie entre 150 et 170° C pendant 60 à 120 minutes, et le deuxième traitement de trempe est effectué en maintenant l'ébauche résultante entre 180 et 250° C pendant 60 à 120 minutes.

3. Procédé de fabrication d'une pièce roulante et coulissante selon la revendication 1 ou 2, dans lequel un corps de roulement destiné à être utilisé dans un palier à roulement est produit à partir d'une ébauche de partie usinée réalisée en un acier à roulements au chrome à haute teneur en carbone sous une forme prédéterminée.

4. Procédé de fabrication d'une pièce roulante et coulissante selon l'une quelconque des revendications 1 à 3, dans lequel le traitement de durcissement de surface est effectué par formage à froid.

5. Procédé de fabrication d'une pièce roulante et coulissante selon la revendication 4, dans lequel le formage à froid est effectué en disposant des billes semi-finies soumises au traitement de trempe final dans un tambour rotatif et en faisant tourner le tambour rotatif à une vitesse requise pendant une période de temps requise, de telle sorte qu'une partie de couche de surface ait une dureté Rockwell C comprise entre 56 et 64.

6. Procédé de fabrication d'une pièce roulante et coulissante selon l'une quelconque des revendications 1 à 5, dans lequel les billes sont finies par polissage après le traitement de durcissement de surface.

7. Procédé de fabrication d'une pièce roulante et coulissante selon l'une quelconque des revendication 1 à 6, dans lequel une bille destinée à être utilisée dans un palier à roulement est produite.
